# FASCICULE DE BREVET EUROPEEN

(11) **EP 2 132 083 B1**
(45) Date de publication et mention de la délivrance du brevet: **12.09.2012**
(21) Numéro de dépôt: 08775643.3
(22) Date de dépôt: 10.03.2008
(51) Int. Cl.: B62M 11/06, B62M 11/14

(54) **BOITE DE VITESSES POUR VELOS, SYSTEME DE CHANGEMENT DES VITESSES**
GETRIEBE FÜR FAHRRÄDER UND GANGSCHALTUNGSSYSTEM
GEARBOX FOR BICYCLES AND GEAR CHANGE SYSTEM

(30) Priorité: 16.03.2007 FR 0701897
(43) Date de publication de la demande: 16.12.2009
(73) Titulaire: Cavalerie, Guy, 42410 Pelussin (FR)
(72) Inventeur: Cavalerie, Guy, 42410 Pelussin (FR)
(74) Mandataire: Schmidt, Martin Peter
(86) Numéro de dépôt international: PCT/FR2008/000309
(87) Numéro de publication internationale: WO 2008/142219

(56) Documents cités:
- EP-A- 1 445 088
- FR-A- 2 776 613
- US-A- 5 553 510
- US-A- 5 611 556

## Description

La présente invention s'applique au domaine technique des boites de vitesses à engrenages destinées aux cycles.
Parmi les nombreux systèmes de boites de vitesses pour vélos à engrenages existants ou simplement brevetés, certains reprennent le concept général de la boite à croisillon. Le document EP 1445 088 reflète l'état de la techinque le plus proche.
Ce type de boite de vitesses est intéressant pour une application aux cycles, par leur encombrement réduit, mais présente l'inconvénient d'une phase de « point mort » lors des changements de vitesses qui, outre le risque de blessure du cycliste, amène assez vite une destruction du croisillon ou des cannelures de pignons. Ce qui fait que ce système n'a pu être dévelloppé.
Le système de boite de vitesses à crabots de type automobile présente les inconvénients d'un encombrement important, d'un poids élevé, et du même problème de phases de « point mort » lors des changements de vitesses incompatible pour une application au vélo.
La présente invention décrit le mécanisme qui permet de changer de vitesse dans une boite de vitesses pour vélo éliminant notamment ce problème.
Le principe général de la boite de vitesses est du type dit à croisillon, mais le système de verrouillage et de sélection des vitesses sont différents.
L' innovation consiste à dissocier la partie « commande » des pièces soumises au couple à transmettre à la roue. Le cycliste n'a pas à déplacer latéralement le croisillon assurant le verrouillage comme dans les systèmes connus.

### Principe général

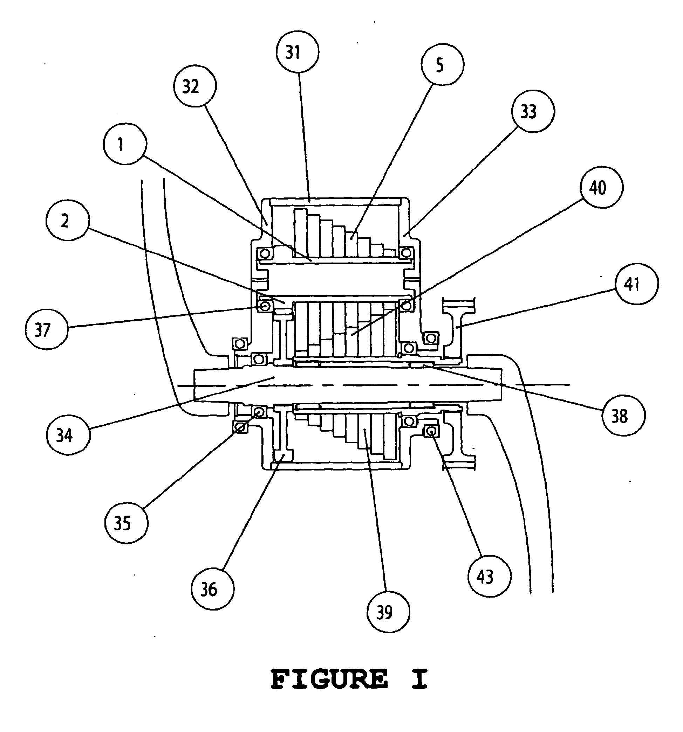

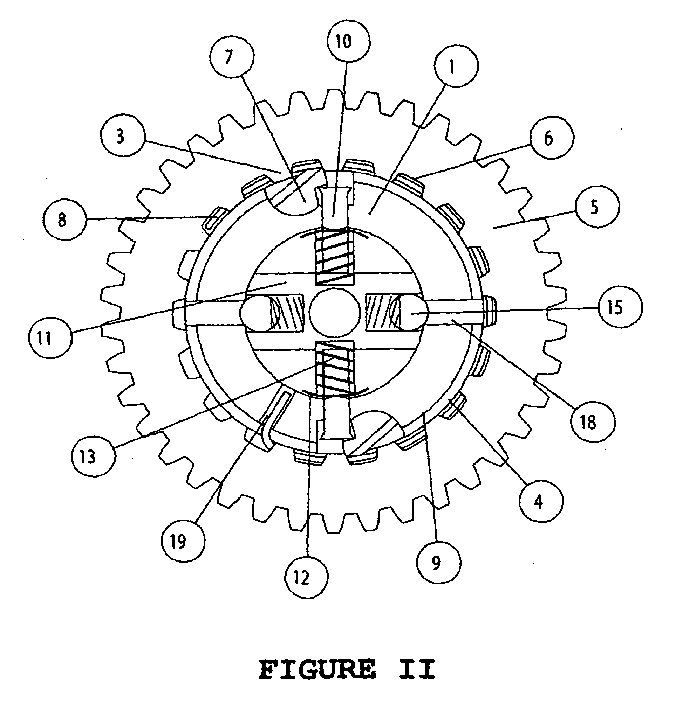

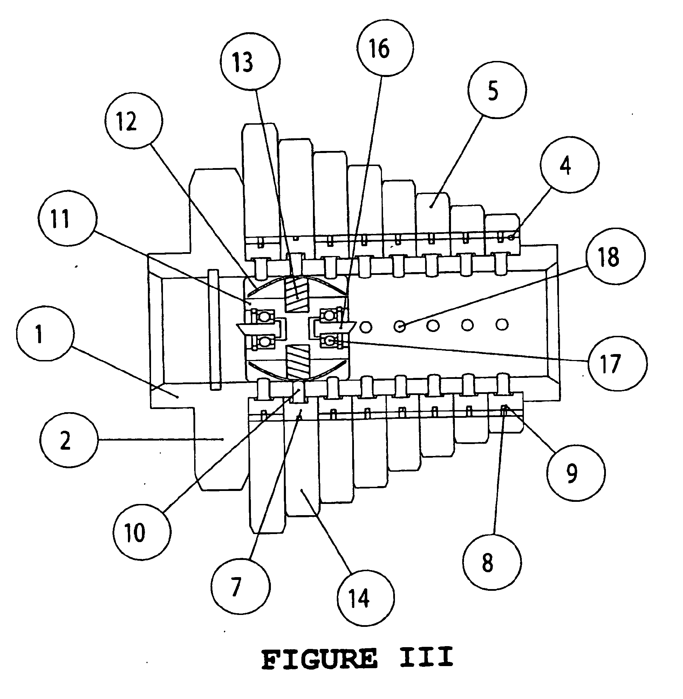

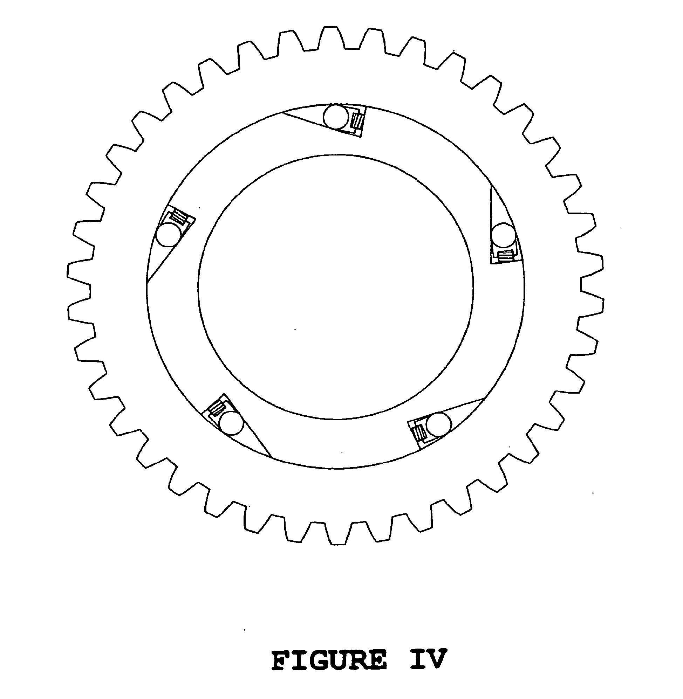

La figure I présente les principaux éléments de la boite de vitesses du type dit « à croisillon ».

La boite de vitesses est placée dans un seul carter composé d'une partie centrale (31) et de deux flasques latéraux (32, 33) supportant les roulements d'arbres.
Sur le premier axe, à l'intérieur du carter, on trouve: l'arbre du pédalier en acier traité (34) sur roulements (35), un ou deux pignons de multiplication primaire en acier traité (36), l'arbre tertiaire en acier traité (40) sur roulements à aiguilles (38) et les pignons tertiaires en acier traité (39) dont les plus grands sont montés sur un système de roue libre évitant ainsi l'effet surmultiplicateur (fig. V) des pignons secondaires associés. Ce système fait l'objet d'une revendication.

Sur le deuxième axe, à l'intérieur du carter, on trouve l'arbre secondaire en acier traité (1) sur roulements (37), un ou deux pignons de multiplication primaire en acier traité (2), les pignons secondaires en acier traité (5) et le système de changement des vitesses revendiqué.
A l'extérieur du carter, on trouve : une poulie de courroie crantée en alliage d'aluminium (41) ou un pignon à chaîne en acier traité pour entraîner la roue arrière et éventuellement deux roulements pivots (43) du bras de suspension de la roue arrière.

### Description du fonctionnement

Les figures II, III, IV présentent le fonctionnement et les pièces constitutives de l'invention.
La figure II présente une coupe vue d'une extrémité de l'arbre secondaire. Sur cette vue, le pignon (5) est encliqueté.
La figure III présente une version à 8 vitesses avec un engrenage primaire composé d'un pignon solidaire du pédalier et d'un pignon (2) solidaire de l'arbre secondaire (1).
Le pédalier entraîne l'arbre secondaire (1) par 1' engrenage primaire (2).
Sur une portée cylindrique lisse de l'arbre secondaire (4) tournent librement les pignons secondaires (5) , ceux-ci comportent des cannelures intérieures (6) ou toute autre forme permettant l'engagement de cliquets (7) et une gorge circulaire (9) permettant l'expansion d'un système élastique (8) de rappel des cliquets .
Les cliquets sont placés dans des rainures usinées par balayage sur les portées cylindriques lisses. A chaque pignon sont associés un ou plusieurs cliquets plaqués dans les rainures par un système élastique de rappel, ici un anneau torique ouvert (8), lui-même logé dans une gorge circulaire de l'arbre secondaire (9).
Un dispositif , ici un piston (10), une bille ou un ergot faisant partie du cliquet, placé dans un perçage de l'arbre secondaire, dépassant à l'intérieur de l'arbre secondaire et, placé sous chaque cliquet, peut le soulever.

A l'intérieur de l'arbre secondaire se déplace une navette (11) comportant des languettes en acier (12) sur ressorts (13) logés dans des rainures. Ces languettes viennent exercer une pression sous les pistons et faire engager les cliquets dans les cannelures du pignon choisi.
L'arbre secondaire (1) entraîne ainsi le pignon choisi (14) qui transmet le mouvement au pignon tertiaire associé et permet la rotation de l'arbre tertiaire.
La poulie crantée (41) ou le pignon à chaîne monté sur l'arbre tertiaire à l'extérieur du carter transmet le mouvement à la roue par une courroie crantée ou une chaîne.
Le déplacement de la navette est commandé par un ou deux câbles (16) sur roulements (17) reliés à une poignée tournante placée au guidon du vélo.
La navette comporte également une ou plusieurs billes d'indexage sur ressorts (15) qui viennent s'engager partiellement dans des perçages (18) de l'arbre secondaire, ou tout autre dispositif pour positionner exactement la navette sous le pignon choisi générant des points d'indexage entre la navette et l'arbre secondaire.
Ce qui permet également au cycliste de sélectionner la vitesse choisie, grâce au léger dur ressenti en manoeuvrant la poignée tournante.
Lors du changement de vitesse, les languettes sur ressorts (12) soulèvent les pistons (10) sélectionnés avant de relâcher les pistons quittés. A cet instant, les languettes soulèvent deux pistons voisins , le pignon le plus grand est entraîné, le plus petit est en roue libre, celui-ci tournant plus vite que l'arbre, les baguettes entre cannelures (3) viennent repousser les cliquets dans les rainures. Ceci permet d'éviter les faux points morts et les problèmes d'engagement de dentures ou de crabots des boites de vitesses existantes.
Afin de réduire l'effet de surmultiplication des petits pignons secondaires (5) lorsque les vitesses les plus longues sont sélectionnées, les plus grands pignons tertiaires (39) sont montés sur roue libre sur l'arbre tertiaire (fig.IV).

### Avantages du dispositif présenté

- Alignement constant de la chaîne ou de la courroie de transmission
- Permet l'utilisation d'une courroie
- Pas de dérailleurs, pas de réglages fréquents.
- Entretien très réduit
- Boite protégée des projections d'eau, de boue, des chocs et des branches
- Gain de poids sur les autres boites de vitesses existantes
- Réduction du poids non suspendu (le moyeu de roue ne comporte qu'un seul pignon ou poulie crantée)
- Garde au sol augmentée, (moins de 50 mm sous l'axe du pédalier)
- Douceur et précision de la commande , pas de déréglage du aux câbles
- Possibilité de « monter » les rapports sans relâcher l'effort
- Possibilité de passer les vitesses même à l'arrêt
- Possibilité de passer plusieurs vitesses simultanément
- Il n'est plus nécessaire de relâcher l'effort sur les pédales pendant un moment pour « descendre » les rapports.

### Inconvénients des boites à crabots évités

- encombrement et poids conséquent
- faux points morts entre les vitesses
- problèmes d'engagement des dentures et des crabots

### Inconvénients des boites à croisillon évités

- problèmes de déplacement et fragilité du croisillon
- problèmes d'engagement latéral du croisillon dans les cannelures

## Revendications

1. Dispositif permettant le changement de vitesses dans une boite à engrenages destinée aux cycles comprenant sur un premier axe, un arbre de pédalier (34), monté sur roulements (35) avec au moins un pignon de multiplication primaire (36), un arbre tertiaire (40) avec roulements à aiguilles (38), des pignons tertiaires (39), et sur un deuxième axe , un arbre secondaire (1) sur roulements (37), ledit arbre secondaire comportant :
- un pignon de multiplication primaire (20)
- une portée cylindrique lisse (4) sur laquelle viennent se placer des pignons secondaires (5)
- une ou plusieurs rainures usinées sur la portée cylindrique lisse (4), destinées à loger des cliquets (7) **caractérisé en ce que** ledit arbre secondaire (1) comporte également:
- une série de gorges circulaires (9) destinées à loger un système élastique de rappel des cliquets (8)
- une série de perçages destinés à loger des pistons (10), des billes, ou tout autre système permettant de soulever les cliquets (7)
- une autre série de perçages (18) destinés à l'engagement partiel de billes d'indexage (15)
-

2. Dispositif de changement de vitesses selon la revendication 1, **caractérisé en ce qu'** il comprend des pignons secondaires (5) pouvant tourner librement sur une portée lisse de l'arbre secondaire (4), comportant des cannelures intérieures (6) ou tout autre forme permettant l'engagement de cliquets (7) et une gorge circulaire (9) permettant l'expansion d'un système de rappel (8).

3. Dispositif selon les revendications 1 et 2, **caractérisé en ce que** des cliquets (7) sont plaqués dans des rainures de l'arbre secondaire par un système de rappel (8) et sont associés à chaque pignon secondaire.

4. Dispositif selon la revendication 1 **caractérisé en ce que** des pistons (10) , des billes ou des ergots de cliquets sont placés dans des perçages de l'arbre secondaire et dépassent à l'intérieur de l'arbre secondaire de manière à pouvoir soulever les cliquets.

5. Dispositif selon l'une des revendications précédentes , **caractérisé en ce qu'**une navette (11) se déplaçant à l'intérieur de l'arbre secondaire comporte un ou deux roulements (17) pour la commande par câbles (16), des rainures dans lesquelles sont placées des languettes (12) sur ressorts (13) permettant le soulèvement des pistons (10), une ou plusieurs billes d'indexage (15) sur ressorts.

6. Dispositif selon l'une des revendications précédentes **caractérisé en ce que** les pignons tertiaires (39) les plus grands sont montés sur un système de roue libre sur l'arbre tertiaire afin de réduire l'effet surmultiplicateur des petits pignons secondaires (fig. V).

## Claims

1. Device enabling gear shifting in a gearbox designed for cycles comprising, on a primary axis, a pedal assembly shaft (34), mounted on bearings (35) with at least one primary overdrive gear (36), a tertiary shaft (40) with needle bearings (38), tertiary gears (39), and, on a secondary axis, a secondary shaft (1) on bearings (37), said secondary axis comprising :
- a primary overdrive gear (20),
- a smooth bearing surface (4) on which are positioned secondary gears (5),
- one or several machined grooves on the smooth bearing surface (4), designed to house pawls (7),
**characterized in that** said secondary shaft (1) further comprises:
- a series of circular grooves (9) designed to house an elastic return system for pawls (8),
- a series of bores designed to house pistons (10), balls, or any other system enabling raising of the pawls (7),
- another series of bores (18) designed for partial engagement of indexing balls.

2. Device according to claim 1 for gear shifting, **characterized in that** it comprises secondary gears (5) able to turn freely on a smooth bearing surface (4) of the secondary axis, comprising interior splines (6) or any other shape enabling engagement of the pawls (7) and a circular groove (9) enabling the expansion of a return system (8).

3. Device according to claim 1 and 2, **characterized in that** pawls (7) are pressed in secondary shaft grooves by a return system (8) and are associated with each secondary gear.

4. Device according to claim 1 **characterised in that** pistons (10), balls or catch for pawls are positioned in the drillings in the interior of the secondary shaft and project into the interior of the secondary shaft so as to be able to raise the pawls.

5. Device according to any of the preceding claim, **characterized in that** a shuttle (11) moving in the interior of the secondary shaft, comprises one or two bearings (17) for the wire control (16), grooves in which are positioned tabs (12) on springs (13) enabling the raising of the pistons (10), one or several indexing ball (15) on springs.

6. Device according to any of the preceding claims **characterized in that** the biggest tertiary gears (39) are mounted on a free wheel system on the tertiary shaft so as to reduce the overdriving effect of the small secondary gears.

## Patentansprüche

1. Vorrichtung zur Gangschaltung in einem Getriebe für Fahrräder, die auf einer ersten Achse eine auf Wälzlagern (35) gelagerte Tretkurbelwelle (34) mit wenigstens einem Primärübersetzungsritzel (36), eine Tertiärwelle (40) mit Nadellagern (38), Tertiärritzeln (39) und auf einer zweiten Achse eine auf Wälzlagern (37) gelagerte Sekundärwelle (1) umfasst, wobei die Sekundärwelle aufweist:
- ein Primärübersetzungsritzel (20),
- eine glatte Zylinderfläche (4), an die sich Sekundärritzel (5) legen,
- eine oder mehrere, auf der glatten Zylinderfläche (4) ausgebildete Nuten zur Aufnahme von Sperrklinken (7),
**dadurch gekennzeichnet, dass** die Sekundärwelle (1) des Weiteren aufweist:
- eine Reihe von Kreisrillen (9) zur Aufnahme eines elastischen Sperrklinken-Rückstellsystems (8),
- eine Reihe von Bohrungen zur Aufnahme von Kolben (10), Kugeln oder einem beliebigen anderen System zum Anheben der Sperrklinken (7),
- eine weitere Reiche von Bohrungen (18) zur teilweisen Aufnahme von Indexierungskugeln (15).

2. Gangschaltungsvorrichtung nach Anspruch 1, **dadurch gekennzeichnet, dass** sie Sekundärritzel (5) umfasst, die an einer glatten Anlagefläche (4) der Sekundärwelle frei notieren können, welche Ablagefläche Innennuten (6) oder eine beliebige andere Ausbildungsform zur Aufnahme von Sperrklinken (7) sowie eine Kreisrille (9) aufweist, welche die Ausdehnung eines Rückstellsystems (8) gestattet.

3. Vorrichtung nach den Ansprüche 1 und 2, **dadurch gekennzeichnet, dass** die Sperrklinken (7) durch ein Rückstellsystem (8) in Nuten der Sekundärwelle hineingepresst werden und jedem Sekundärritzel zugeordnet sind.

4. Vorrichtung nach Anspruch 1, **dadurch gekennzeichnet, dass** Kolben (10), Kugeln oder Sperrklinkennasen in Bohrungen der Sekundärwelle angeordnet sind und innerhalb der Sekundärwelle so hervorstehen, dass sie die Sperrklinken anheben können.

5. Vorrichtung nach einem der vorhergehenden Ansprüche, **dadurch gekennzeichnet, dass** eine sich innerhalb der Sekundärwelle bewegende Pendelvorrichtung (11) ein oder zwei Wälzlager (17) für die Kabelsteuerung (16), Nuten mit darin befindlichen, auf Federn (13) gelagerten Zungen (12) zum Anheben der Kolben (10), eine oder mehrere federgelagerte Indexierungskugeln (15) aufweist.

6. Vorrichtung nach einem der vorhergehenden Ansprüche, **dadurch gekennzeichnet, dass** die größten Tertiärritzel (39) auf einem Freilaufsystem auf der Tertiärwelle montiert sind, um die Übersetzung ins Schnelle der kleinen Sekundärritzel zu reduzieren.
